# EUROPÄISCHE PATENTSCHRIFT

(11) **EP 1 659 033 B1**
(45) Veröffentlichungstag und Bekanntmachung des Hinweises auf die Patenterteilung: **11.01.2012**
(21) Anmeldenummer: 05025010.9
(22) Anmeldetag: 16.11.2005
(51) Int. Cl.: B60R 19/18

(54) **Integrierte Randversteifung der Aussenhaut eines Stossfängers**
Bumper fascia with integrated edge stiffening
Habillage pour pare-chocs de véhicules automobiles avec bords renforcés

(30) Priorität: 22.11.2004 DE 102004056338
(43) Veröffentlichungstag der Anmeldung: 24.05.2006
(73) Patentinhaber: Faurecia Exteriors GmbH, 31655 Stadthagen (DE)
(72) Erfinder: Kammerer, Roland, 69300 Caluire (FR); Ludwig, Marc, 61440 Oberursel (DE)
(74) Vertreter: Scherzberg, Andreas Hans

(56) Entgegenhaltungen:
- EP-A1- 0 028 869
- DE-A1- 2 365 213
- DE-A1- 3 125 650
- FR-A1- 2 809 344
- JP-A- 59 073 344
- US-A- 4 167 282
- US-A- 4 350 378
- US-B1- 6 308 799

## Beschreibung

Die Erfindung betrifft eine spritzgegossene Außenhaut eines Stoßfängers aus Kunststoff für ein Kraftfahrzeug und ein Verfahren zu dessen Herstellung.

Eine solche Aussenhart ist aus der DE 2 365 213 und der US 4 350 378 bekannt.

Horizontal liegende Oberflächenbereiche von Außenhäuten von Stoßfängern sind von Fahrzeugherstellern mit engen Bauteiltoleranzen hinsichtlich des Flächeneinfalls versehen. Ziel ist es hier, die Fugentoleranzen möglichst klein und somit den optischen Eindruck für den Endkunden sehr hochwertig erscheinen zu lassen.

Um diesen Anforderungen zu genügen, werden die Stoßfänger an ihrem Randbereich partiell durch Zusatzbauteile versteift und geführt. Derartige Bauteile werden entweder mechanisch (geclipst / verschraubt / gesteckt oder durch sonstige Verfahren) befestigt oder thermisch (Schweißen / Umbüge / Reibschweißen oder sonstige Verfahren) gefügt. Dies geschieht durch einen Arbeitsschritt nach der Formgebung durch das Spritzgießwerkzeug.

Die verwendeten Zusatzbauteile haben ein eigenes dimensionelles Verzugsverhalten, welches in der Regel negativ die spaltbildenden Bereiche beeinflusst.

Bei Wärmeausdehnung des Stoßfängers bzw. der Außenhaut beeinflussen Verstärkungsteile die tolerierten Oberflächenbereiche negativ.

Die Zusatzbauteile und deren Fügeprozess steigern außerdem die Herstellkosten des Bauteiles.

Die Recyclingfähigkeit des Stoßfängers verschlechtert sich durch diese Zusatzbauteile.

Das Zusatzgewicht, welches die Zusatzbauteile und deren Befestigungselemente mitbringen, erhöht den Kraftstoffverbrauch des Fahrzeuges.

Der Erfindung liegt die Aufgabe zugrunde, die spritzgegossene Außenhaut eines spritzgegossenen Stoßfängers aus Kunststoff für ein Kraftfahrzeug, wobei die Randbereiche dieser Außenhaut, die zu Anbauteilen am Kraftfahrzeug gewandt ist, zu denen definierte Fugenbilder vorhanden sein müssen, durch eine Randversteifung verstärkt sind, so zu verbessern, dass eine Kosteneinsparung im Bereich Werkzeugkosten und Montagekosten erreicht ist, bei gleichzeitiger Gewichtseinsparung.

Erfindungsgemäß wird diese Aufgabe durch die Merkmale des Anspruchs 1 gelöst.

Dadurch, dass die Randversteifung in die Außenhaut integriert ist und aus einem Umbug im Randbereich besteht, werden sämtliche Zusatzbauteile zur Randversteifung eingespart. Außerdem ist eine Gewichtseinsparung der Außenhaut erreicht worden. Auch erübrigen sich zusätzliche Arbeitsschritte nach der Formgebung am Randbereich.

Bevorzugt ist der Umbug im Querschnitt U-förmig ausgebildet und besteht vorteilhaft aus zwei abgebogenen Schenkeln, wobei jeder dieser Schenkel um ungefähr 90 Grad abgebogen ist.

Die Randversteifung sollte sich über den gesamten zum Anbauteil gewandten Randbereich der Außenhaut erstrecken, um ein definiertes Fugenbild zu erreichen.

Die Tiefe der Randversteifung beträgt in bevorzugter Ausgestaltung mindestens 10 mm. Hierdurch ist der Randbereich hinreichend verstärkt.

Ein Verfahren zur Herstellung einer erfindungsgemäßen Außenhaut eines Stoßfängers in einem Spritzgießwerkzeug mit einer Matrize, einem Kern und mit Schiebern ist dadurch gekennzeichnet, dass im Randbereich der herzustellenden Außenhaut zusätzliche Schieber im Kern verwendet werden, die nach der Formgebung die Hinterschnitte im Randbereich freigeben.

Durch geschickte Werkzeug- und Artikelauslegung konnte ein Entformungsprinzip für horizontal liegende Oberflächen realisiert werden. Das Entformungsprinzip ist neu und allgemein für die Versteifung von horizontal liegenden Oberflächen verwendbar. Es realisiert eine Bauteilgeometrie, die den Entfall von Versteifungsbauteilen sowie deren Montage und Demontage im Recyclingfalle erlaubt.

Durch geeignete Übergänge zu den nebenliegenden Bereichen werden Steifigkeitssprünge und somit negative Toleranzbeeinflussung bei Wärmeausdehnung vermieden.

Die Erfindung besteht also in der Integration einer Randversteifung in den Randbereich eines Stoßfängers bzw. seiner Außenhaut. Dies wird durch einen Umbug von 180 Grad der Außenhaut (Pelle) des Stoßfängers am Rand erreicht.

Bisher werden die dünnen (~3 mm) Außenhäute eines Stoßfängers nachträglich, d.h. nach der Formgebung durch diverse Verstärkungsteile so versteift, dass Sie die nötige Formbeständigkeit erreichen um an ein Fahrzeug maßgenau montiert werden zu können.

Durch eine kluge Anordnung von Schiebern im Formgebungswerkzeug (Presse) wird die Versteifung des Bauteils durch einen Umbug der Pelle (Außenhaut) im Randbereich direkt realisiert. Dies erlaubt eine enorme Kosteneinsparung aufgrund der Tatsache, dass diverse Zusatzteile eingespart werden können.

Vorteilhafterweise werden speziell drei Schieber bei der Herstellung der Pelle des Stoßfängers im Presswerkzeug verwendet. Diese Schieber sind am Randbereich vorgesehen und geben vor dem Öffnen des Werkzeuges den Hinterschnitt frei.

Bevorzugt wird diese Randversteifung an der Pelle des Stoßfängers durch einen Umbug um ca. 180 Grad nur dort angewendet, wo definierte Fugenbilder zu Anbauteilen an der Karosserie erzeugt werden müssen. Dies sind zum Beispiel der Kotflügel, die Motorhaubenabdeckung und der Hauptscheinwerfer. Erfindungsgemäß sind die Randbereiche des Stoßfängers, die zu den Anbauteilen gewandt sind, zu denen definierte Fugenbilder erzeugt werden müssen, durch eine U-förmige Versteifung verstärkt, wobei sich diese U-förmige Randversteifung durchgängig über die gesamte Breite bzw. den gesamten Randbereich der Pelle erstrecken muß, die zum Anbauteil gewandt ist. Dies ist ein wesentliches Merkmal der Erfindung, da nur hierdurch das gewünschte definierte Fugenbild zu erreichen ist.

Wenn sich die U-förmige Randversteifung nicht über den gesamten Randbereich der Pelle erstreckt, die zum Anbauteil gewandt ist, ergibt sich zum Beispiel im Betrieb bei hohen oder tiefen Temperaturen etc. ein unschönes Fugenbild.

Die Randversteifung besteht aus zwei jeweils um ca. 90 Grad abgebogenen Schenkeln.

Nachfolgend wird die Erfindung anhand von drei Figuren näher beschrieben.

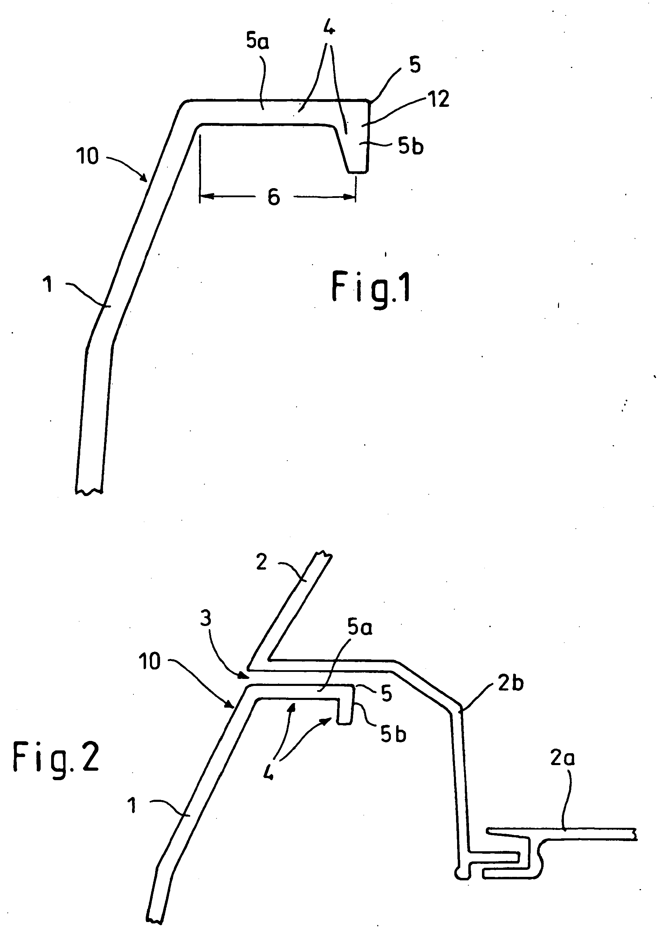

Figur 1 zeigt im Schnitt einen Teil der Außenhaut 1 eines Stoßfängers für ein Kraftfahrzeug. Zur Verstärkung des Randbereiches weist die Außenhaut 1 eine Randversteifung 4 auf, die im Schnitt U-förmig ausgebildet ist.

Diese Randversteifung 4 ist als Umbug 5 ausgebildet und besteht aus einem ersten Schenkel 5a und einem zweiten Schenkel 5b. Jeder dieser beiden Schenkel 5a, 5b ist um ungefähr 90 Grad abgebogen, d. h. der erste Schenkel 5a ist um ungefähr 90 Grad zur Außenhaut 1 abgebogen und der zweite Schenkel 5b ist um ungefähr 90 Grad zum ersten Schenkel 5a abgebogen. In der Figur 1 ist der Schenkel 5a um 115 Grad abgebogen. Auch dieser Winkel wird als ungefähr 90 Grad verstanden. Wichtig ist nur, dass die Randversteifung 4, die aus einem Umbug 5 mit den beiden Schenkeln 5a, 5b besteht, im Querschnitt ungefähr U-förmig ausgebildet ist. Die Randversteifung 4 ist also ein doppelter Umbug mit jeweils einem Umbug um ungefähr 90 Grad.

In der in Figur 1 gezeigten Ausführungsform ist der Übergang 12 vom ersten Schenkel 5a zum zweiten Schenkel 5b durch eine Materialverdickung ausgebildet, wodurch dieser Übergang 12 verstärkt ist.

Mit dem Bezugszeichen 6 ist die Tiefe der Randversteifung 4 gekennzeichnet, die mindestens 10 mm betragen sollte.

Figur 2 zeigt eine Ausführungsform der erfindungsgemäßen Außenhaut 1, die mit der Ausführungsform gemäß Figur 1 bis auf den Übergang 12 (siehe Figur 1) identisch ist. Dieselben Bezugszeichen zeigen auch denselben Gegenstand.

In dieser Figur 2 ist die Außenhaut 1 des Stoßfängers am Kraftfahrzeug montiert dargestellt, bzw. zeigt wieder im Schnitt einen Teil der Außenhaut 1, die zu einem Anbauteil 2 gewandt ist. In der hier gezeigten Ausführungsform ist das Anbauteil 2 ein Scheinwerfer mit einem Kunststoffgehäuse 2a und einem Glas 2b.

Gut zu erkennen ist das Fugenbild 3, bzw. der Spalt zwischen dem Randbereich der Außenhaut 1 und dem Scheinwerfer. Dieses Fugenbild 3 bzw. der Spalt muss gleichbleibend bei allen Temperaturen und Belastungen, d. h. definiert, sein.

Der Sichtbereich ist mit dem Bezugszeichen 10 gekennzeichnet (siehe auch
Figur 1). Dieser Sichtbereich 10 muss in allen Situationen optisch einwandfrei sein, d. h. das Fugenbild 3 bzw. der Abstand des Randbereiches der Außenhaut 1 zum Anbauteil 2 muss gleich sein. Dies ist durch die erfindungsgemäße Randversteifung 4 erreicht.

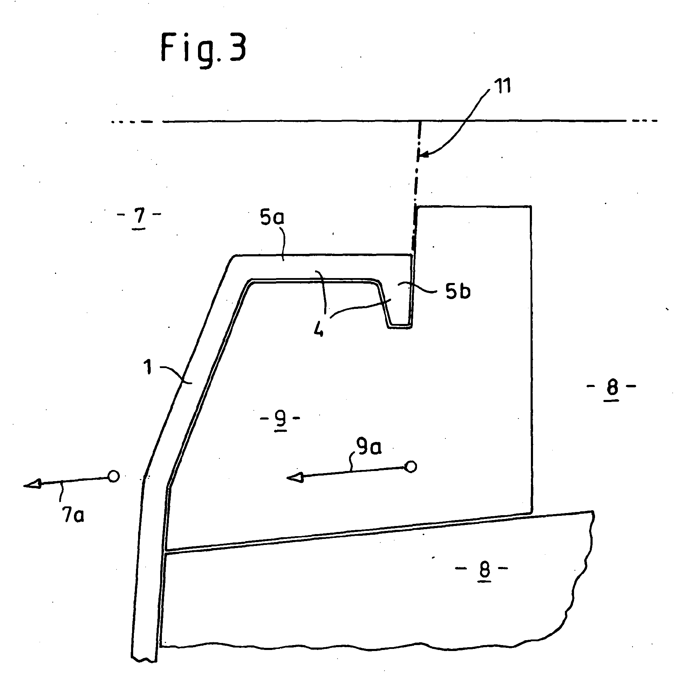

Figur 3 zeigt einen Ausschnitt aus einem Spritzgießwerkzeug mit einer Matrize 7, einem fest stehenden Kern 8 und Schiebern 9.

Mit einem derartigen Spritzgießwerkzeug werden die erfindungsgemäßen Außenhäute 1 hergestellt.

Mit dem Bezugszeichen 7a ist die Bewegungsrichtung der Matrize 7 schematisch angegeben. Der gezeigte Schieber 9 mit seiner Bewegungsrichtung 9a ist als zusätzlicher Schieber im Spritzgießwerkzeug vorgesehen, um nach der Formgebung die Hinterschnitte im Randbereich freizugeben. Das Bezugszeichen 11 zeigt die Trennebene zwischen Kern 8 und Matrize 7.

### Bezugszeichenliste

| | | |
|---|---|---|
| 1 | Außenhaut | |
| 2 | Anbauteil | 2a Kunststoffgehäuse } Scheinwerfer |
| | | 2b Glas |
| 3 | Fugenbilder | |
| 4 | Randversteifung | |
| 5 | Umbug | 5a erster Schenkel |
| | | 5b zweiter Schenkel |
| 6 | Tiefe | |
| 7 | Matrize | 7a Matrizenbewegung |
| 8 | Kern | |
| 9 | Schieber | 9a Schieberbewegung |
| 10 | Sichtbereich Außenhaut | |
| 11 | Trennebene Kern / Matrize | |
| 12 | Übergang | |

## Patentansprüche

1. Spritzgegossene Außenhaut (1) eines Stoßfängers aus Kunststoff für ein Kraftfahrzeug, wobei die Randbereiche dieser Außenhaut (1), die zu Anbauteilen (2) am Kraftfahrzeug gewandt sind, zu denen definierte Fugenbilder (3) vorhanden sein müssen, d.h. der Abstand des Randbereiches der Außenhaut (1) zum Anbauteil (2) muss gleich sein, durch eine Randversteifung (4) verstärkt sind, wobei die Randversteifung (4) in die Außenhaut (1) integriert ist und aus einem Umbug (5) im Randbereich besteht und der Umbug (5) im Querschnitt U-förmig ausgebildet ist, wobei der Umbug (5) aus zwei abgebogenen Schenkeln (5a, 5b) besteht und jeder dieser Schenkel (5a, 5b) um ungefähr 90 Grad abgebogen ist, d. h. der erste Schenkel (5a) ist um ungefähr 90 Grad zur Außenhaut (1) abgebogen und der zweite Schenkel (5b) ist um ungefähr 90 Grad zum ersten Schenkel (5a) abgebogen und die Tiefe (6) der Randversteifung (4) mindestens 10 mm beträgt und die Randversteifung (4) sich über den gesamten zum Anbauteil (2) gewandten Randbereich der Auβenhaut (1) erstreckt.

2. Verfahren zur Herstellung einer Außenhaut (1) eines Stoßfängers aus Kunststoff nach Anspruch 1 in einem Spritzgießwerkzeug mit einer Matrize (7), einem Kern (8) und mit Schiebern(9),
**dadurch gekennzeichnet, dass** im Randbereich der herzustellenden Außenhaut (1) zusätzliche Schieber (9) im Kern (8) verwendet werden, die nach der Formgebung die Hinterschnitte im Randbereich freigeben.

## Claims

1. Injection-moulded outer skin (1) of a bumper made from plastics material for a motor vehicle, wherein the edge regions of this outer skin (1) that face mounting portions (2) on the motor vehicle, for which defined joint patterns (3) must be present, that is, the distance of the edge region of the outer skin (1) to the mounting portion (2) must be uniform, are reinforced by an edge reinforcement (4), wherein the edge reinforcement (4) is integrated into the outer skin (1) and consists of a bend (5) in the edge region, and the bend (5) is formed so as to be U-shaped in cross-section, wherein the bend (5) consists of two bent-off legs (5a, 5b) and each of these legs (5a, 5b) is bent off by approximately 90 degrees, that is, the first leg (5a) is bent off by approximately 90 degrees with respect to the outer skin (1), and the second leg (5b) is bent off by approximately 90 degrees with respect to the first leg (5a), and the depth (6) of the edge-reinforcement (4) amounts to at least 10 mm, and the edge reinforcement (4) extends over the whole edge region of the outer skin (1) that faces the mounting portion (2).

2. Method for producing an outer skin (1) of a bumper made from plastics material according to claim 1 in an injection-moulding die with a matrix (7), a core (8) and with slides (9),
**characterised in that** in the edge region of the outer skin (1) that is to be produced use is made of additional slides (9) in the core (8) which after the shaping free the undercuts in the edge region.

## Revendications

1. Habillage (1) moulé par injection d'un pare-chocs en matière plastique, destiné à un véhicule automobile, sachant que les zones de bord dudit habillage (1), qui sont tournées vers des éléments montés (2) par rapport auxquels il doit y avoir des motifs de joints (3) définis, c'est-à-dire que la distance de la zone de bord de l'habillage (1) par rapport à l'élément monté (2) doit être uniforme, sont renforcées par un raidisseur de bord (4), ledit raidisseur de bord (4) étant intégré dans l'habillage (1) et étant constitué d'une portion pliée (5) dans la zone de bord, et la zone pliée (5) ayant une section en forme de U, ladite zone pliée (5) étant constituée de deux branches (5a, 5b) pliées, et chacune de ces branches (5a, 5b) étant pliée d'environ 90 degrés, c'est-à-dire que la première branche (5a) est pliée d'environ 90 degrés par rapport à l'habillage (1) et la deuxième branche (5b) est pliée d'environ 90 degrés par rapport à la première branche (5a), et la profondeur (6) du raidisseur de bord (4) étant d'au moins 10 mm, et le raidisseur de bord (4) s'étendant sur toute la zone de bord de l'habillage (1) qui est tournée vers l'élément monté (2).

2. Procédé de fabrication d'un habillage (1) d'un pare-chocs en matière plastique selon la revendication 1, dans un outil de moulage par injection comprenant une matrice (7), un noyau (8) et des tiroirs (9),
**caractérisé en ce que**, dans la zone de bord de l'habillage (1) à fabriquer, on utilise des tiroirs (9) supplémentaires dans le noyau (8), tiroirs qui, après le moulage, libèrent les contre-dépouilles dans la zone de bord.
